# EUROPEAN PATENT APPLICATION

(11) **EP 4 737 279 A1**
(43) Date of publication of application: **06.05.2026**
(21) Application number: 25207695.5
(22) Date of filing: 09.10.2025
(51) Int. Cl.: B62J 6/056, B62J 6/165, B62J 6/20, B62J 6/26, B62J 50/22, G09F 21/04

(54) **SYNCHRONIZED MULTI-UNIT LIGHTING DISPLAY FOR VELOCIPEDE**

(30) Priority: 01.11.2024 US 202463715075 P
(71) Applicant: Huffy Corporation, Miamisburg, OH 45342 (US)
(72) Inventor: Donald, K. Jessie, Jr., Miamisburg, OH 45342 (US)
(74) Representative: Patentanwälte Bauer Vorberg Kayser

(57) **Abstract**

Systems (250), methods, and computer program products for providing synchronized lighting displays for velocipedes (10). One of a plurality of lighting units (56-58) causes light emitting devices (92) thereof to emit light according to a predetermined lighting pattern, and transmits a wireless signal (264) including synchronization information for the predetermined lighting pattern. Each of the other lighting units (57, 58) receives the wireless signal, and in response thereto, emits light according to the predetermined lighting pattern. The predetermined lighting pattern emitted by the other lighting units is synchronized with the predetermined lighting pattern emitted by the one lighting unit using the synchronization information provided by the wireless signal.

## Description

### Cross-Reference to Related Applications

This application claims priority to U.S. Provisional Patent Application No. 63/715,075 filed on November 1, 2024, the disclosure of which is incorporated by reference herein in its entirety.

### Technical Field

The present invention relates generally to bicycles and other velocipedes and, more particularly, to lighting accessories for velocipedes.

### Background

Bicycles, tricycles, and other velocipedes have long been popular items with children and adults alike. Although these types of vehicles have been in existence for a long time, they remain as popular and relevant today as ever. Accordingly, manufacturers continue to strive to improve aspects of these products to increase their desirability and to distinguish them from each other.

Currently, the most popular type of velocipede is the bicycle. Most bicycles purchased today are mass produced, and thus share similar components and have a similar appearance. To distinguish their bike from similar bicycles owned by others, some users enjoy adding accessories to their bicycle to alter the look thereof. These accessories may be attached to the bicycle at the factory or by the user, and may provide functional as well as aesthetic value. These types of accessories include accessories that emit light, which can both improve the look of a bicycle as well as improve rider safety by increasing visibility, especially at night.

Thus, there is a need for improved lighting accessories that can be attached to velocipedes.

### Summary

In an aspect of the invention, a lighting system for a velocipede is provided. The lighting system includes a first lighting unit and one or more second lighting units. Each of the lighting units includes a communication device, one or more light emitting devices, and a controller. The controller of the first lighting unit is configured to cause the light emitting devices thereof to emit light according to a predetermined lighting pattern, and cause the communication device thereof to transmit a wireless signal including synchronization information for the predetermined lighting pattern. The communication device of each of the second lighting units receives the wireless signal transmitted from the first lighting unit. In response to the communication device receiving the wireless signal, the controller of the second lighting unit causes the light emitting devices thereof to emit light according to the predetermined lighting pattern, and synchronizes the predetermined lighting pattern with the predetermined lighting pattern emitted by the light emitting devices of the first lighting unit using the synchronization information provided by the wireless signal.

In an embodiment of the system, the communication device of the first lighting unit may include an infrared transmitter, and the communication device of each of the second lighting units may include an infrared receiver.

In another embodiment of the system, the predetermined lighting pattern may have a display time, and each controller may be further configured to cause its respective lighting unit to enter a sleep mode in response to the display time lapsing.

In another embodiment of the system, the controller of the first lighting unit may be further configured to wake up the system from the sleep mode in response to receiving an input from a user interface.

In another embodiment of the system, the user interface may include a button configured to provide the input to the controller of the first lighting unit in response to the button being activated.

In another embodiment of the system, the controller of each of the second lighting units may be further configured to wake up the second lighting unit from the sleep mode in response to receiving the wireless signal.

In another embodiment of the system, at least one of the lighting units may further include a first mirror having a reflective surface and a second mirror having a reflective surface that faces the reflective surface of the first mirror. The mirrors may be positioned so as to define a space between the reflective surface of the first mirror and the reflective surface of the second mirror. In this embodiment, at least one of the light emitting devices of the at least one lighting unit may be positioned in the space between the reflective surface of the first mirror and the reflective surface of the second mirror. The reflective surface of the first mirror may reflect at least a portion of the light emitted by the at least one light emitting device toward the reflective surface of the second mirror, and the reflective surface of the second mirror may reflect a first portion of the light received from the first mirror back towards the first mirror, and transmit a second portion of the light received from the first mirror outward away from the lighting unit.

In another embodiment of the system, each of the first mirror and the second mirror may include a peripheral region, and the at least one light emitting device may be positioned between the peripheral regions of the first mirror and the second mirror.

In another embodiment of the system, the reflective surface of the first mirror may be a first reflective surface thereof, and the at least one lighting unit may further include a third mirror having a reflective surface. In this embodiment, the first mirror may include a second reflective surface opposite the first reflective surface, the reflective surface of the third mirror may face the second reflective surface of the first mirror and be positioned so as to define a space between the second reflective surface of the first mirror and the reflective surface of the third mirror. At least one other light emitting device of the lighting unit may be positioned in the space between the second reflective surface of the first mirror and the reflective surface of the third mirror. The second reflective surface of the first mirror may reflect at least a portion of the light emitted by the other light emitting device toward the reflective surface of the third mirror. The reflective surface of the third mirror may reflect a first portion of the light received from the second reflective surface of the first mirror back towards the first mirror, and transmit a second portion of the light received from the second reflective surface of the first mirror outward away from the at least one lighting unit.

In another embodiment of the system, the second lighting unit may further include a housing that provides a chainguard for the velocipede.

In another aspect of the invention, a method of controlling a plurality of lighting units is provided. The method includes emitting light from one or more light emitting devices of the first lighting unit according to the predetermined lighting pattern, and transmitting the wireless signal from the first lighting unit including the synchronization information for the predetermined lighting pattern. The method further includes emitting light from the one or more light emitting devices of the one or more second lighting units according to the predetermined lighting pattern in response to receiving the wireless signal transmitted from the first lighting unit, and synchronizing the predetermined lighting pattern emitted by the one or more light emitting devices of the one or more second lighting units with the predetermined lighting pattern emitted by the one or more light emitting devices of the first lighting unit using the synchronization information provided by the wireless signal.

In an embodiment of the method, the wireless signal may be the infrared signal.

In another embodiment of the method, the predetermined lighting pattern may have the display time, and the method may further include causing each of the lighting units to enter the sleep mode in response to the display time lapsing.

In another embodiment of the method, the method may further include waking up the first lighting unit from the sleep mode in response to receiving the input from the user interface.

In another embodiment of the method, the method may further include waking up the second lighting units from the sleep mode in response to receiving the wireless signal from the first lighting unit.

In another embodiment of the method, the method may further include reflecting the at least the portion of the light emitted by the light emitting devices from the first mirror toward the second mirror, reflecting the first portion of the light received by the second mirror back towards the first mirror, and transmitting the second portion of the light received by the second mirror outward away from the at least one lighting unit.

In another embodiment of the method, the first mirror may include the first reflective surface and the second reflective surface opposite the first reflective surface, and the portion of the light emitted by the light emitting devices from the first mirror may be reflected by the first reflective surface. In this embodiment, the method may further include reflecting the at least the portion of the light emitted by the at least one other light emitting device from the second reflective surface of the first mirror toward the third mirror, reflecting the first portion of the light received by the third mirror back towards the second reflective surface of the first mirror, and transmitting the second portion of the light received by the third mirror outward away from the at least one of the first lighting unit and the second lighting unit.

In another embodiment of the invention, a computer program product is provided. The computer program product includes a non-transitory computer-readable storage medium, and program code stored on the non-transitory computer-readable storage medium. The program code is configured so that, when executed by one or more processors, the program code causes the one or more processors to cause the first lighting unit to emit light from the one or more light emitting devices of the first lighting unit according to the predetermined lighting pattern, cause the first lighting unit to transmit the wireless signal including the synchronization information for the predetermined lighting pattern, in response to receiving the wireless signal transmitted from the first lighting unit, cause the one or more second lighting units to emit light from the light emitting devices of the second lighting units according to the predetermined lighting pattern, and cause the second lighting units to synchronize the predetermined lighting pattern emitted by the light emitting devices of the second lighting units with the predetermined lighting pattern emitted by the light emitting devices of the first lighting unit using the synchronization information provided by the wireless signal.

### Brief Description of the Drawings

The accompanying drawings, which are incorporated in and constitute a part of this specification, illustrate various embodiments of the invention and, together with the general description of the invention given above, and the detailed description of the embodiments given below, serve to explain the embodiments of the invention.
Fig. 1 is a perspective view of an exemplary bicycle including a handlebar lighting unit, a frame lighting unit, and a chainguard lighting unit.
Fig. 2 is a perspective view from the front of the handlebar lighting unit of Fig. 1.
Fig. 3 is a perspective view from the rear of the handlebar lighting unit of Figs. 1 and 2.
Fig. 4 is an exploded view of the handlebar lighting unit of Figs. 1-3.
Fig. 5 is a cross-sectional view of the handlebar lighting unit of Figs. 1-4.
Fig. 6 is a perspective view of the frame lighting unit of Fig. 1.
Fig. 7 is an exploded view of the frame lighting unit of Figs. 1 and 6.
Fig. 8 is a cross-sectional view of the frame lighting unit of Figs. 1, 6, and 7.
Fig. 9 is a perspective view of the chainguard lighting unit of Fig. 1.
Fig. 10 is an exploded view of the chainguard lighting unit of Figs. 1 and 9.
Fig. 11 is a cross-sectional view of the chainguard lighting unit of Figs. 1, 9, and 10.
Fig. 12 is a schematic view of a plurality of lighting modules that may be used by the lighting units of Figs. 1-11 to generate synchronized lighting patterns.
Figs. 13 and 14 are flowcharts illustrating processes that may be executed by the lighting modules of Fig. 12 to implement synchronized lighting.
Fig. 15 is a schematic view of a controller that may be used to implement one or more of the lighting units, modules, or processes shown in Figs. 1-14.

It should be understood that the appended drawings are not necessarily to scale, and may present a somewhat simplified representation of various features illustrative of the basic principles of the invention. The specific design features of the sequence of operations disclosed herein, including, for example, specific dimensions, orientations, locations, and shapes of various illustrated components, may be determined in part by the particular intended application and use environment. Certain features of the illustrated embodiments may have been enlarged or distorted relative to others to facilitate visualization and a clear understanding. In particular, thin features may be thickened, for example, for clarity or illustration.

### Detailed Description

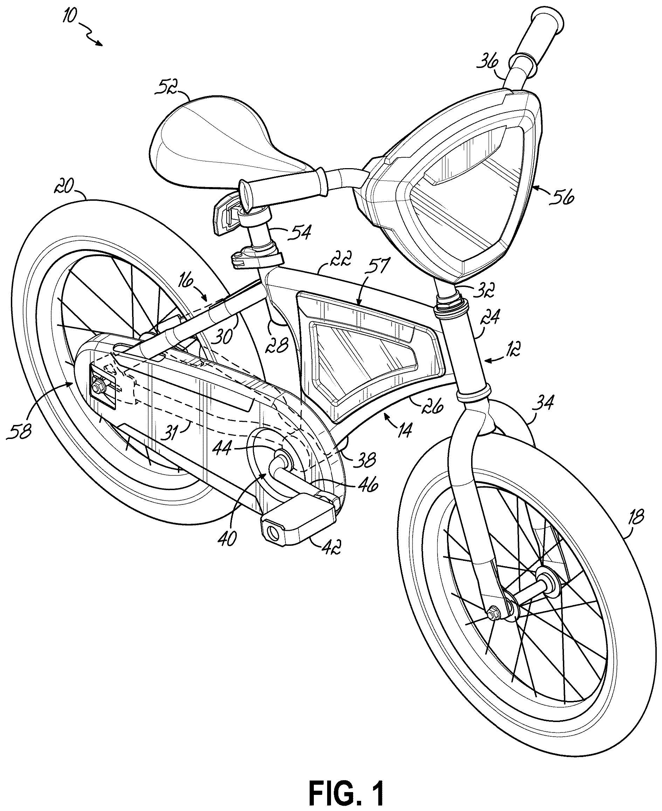

Fig. 1 depicts an exemplary a bicycle 10 including a frame 12 having a main triangle 14 and a rear triangle 16, a front wheel 18, and a rear wheel 20 in a generally conventional configuration. The main triangle 14 may be defined by a top tube 22, a head tube 24, a down tube 26, and a seat tube 28 of frame 12. The rear triangle 16 may be defined by the seat tube 28, one or more seat stays 30 (e.g., two seat stays 30), and one or more chain stays 31 (e.g., two chain stays) of frame 12. The head tube 24 may be configured to receive a fork 34 that operatively couples the front wheel 18 to the frame 12. The wheel fork 34 may be operatively coupled to a set of handlebars 36 by a steerer tube 32, which in turn is operatively coupled to the head tube 24 of frame 12 by a headset (not shown) that allows the steerer tube 32 to rotate within the head tube 24. The headset may thereby enable the handlebars 36 to rotate the wheel fork 34 relative to the head tube 24 so that the rider can steer the bicycle 10.

Each of the down tube 26, the seat tube 28, and chain stays 31 may have one end operatively coupled a bottom bracket shell 38. The bottom bracket shell 38 may operatively couple a crankset 40 to the frame 12 of bike 10. The crankset 40 may include one or more pedals 42 and a bottom bracket 44 operatively coupled to each pedal 42 by a respective crank arm 46. The bottom bracket 44 may be operatively coupled to one or more chainrings (not shown) and configured to rotate within the bottom bracket shell 38 in response to rotational force being applied to the pedals 42.

The rear wheel 20 may be operatively coupled to the frame 12 by the seat stays 30 and chain stays 31, and may include one or more sprockets (not shown). The one or more sprockets may be operatively coupled to the one or more chainrings by a chain (not shown) that transfers rotational force from the crankset 40 to the rear wheel 20. A seat 52 may be operatively coupled to seat tube 28 by a seat post 54 configured to enable the height of the seat 52 to be adjusted to the rider. In the depicted embodiment, exemplary bike 10 further includes a plurality of exemplary lighting units 56-58, e.g., a handlebar lighting unit 56 positioned on the handlebars 36, a frame lighting unit 57 positioned in the main triangle 14 of frame 12, and a chainguard lighting unit 58 that encloses the chain of bicycle 10.

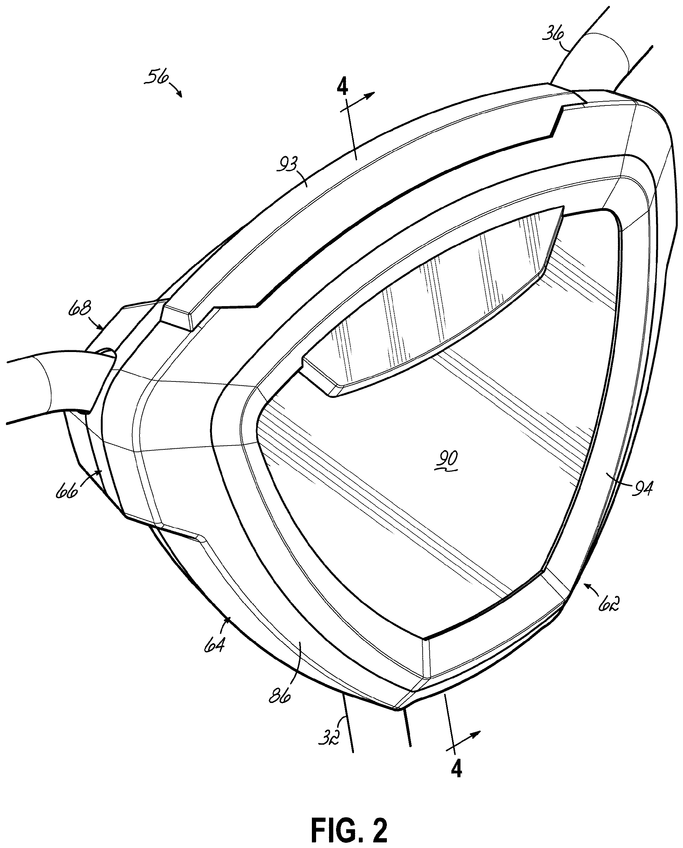

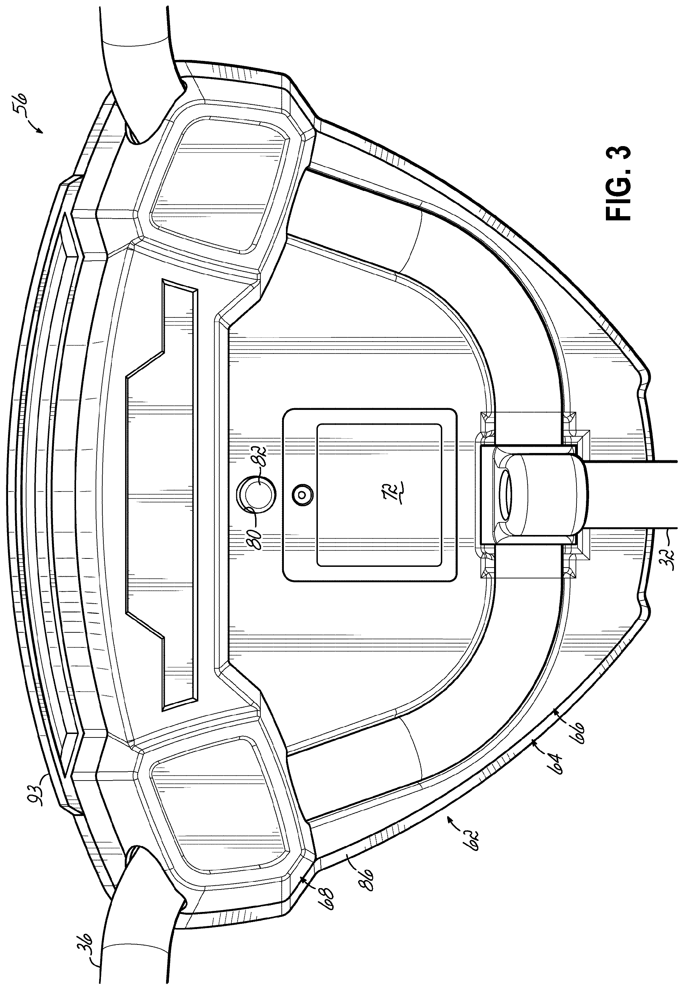

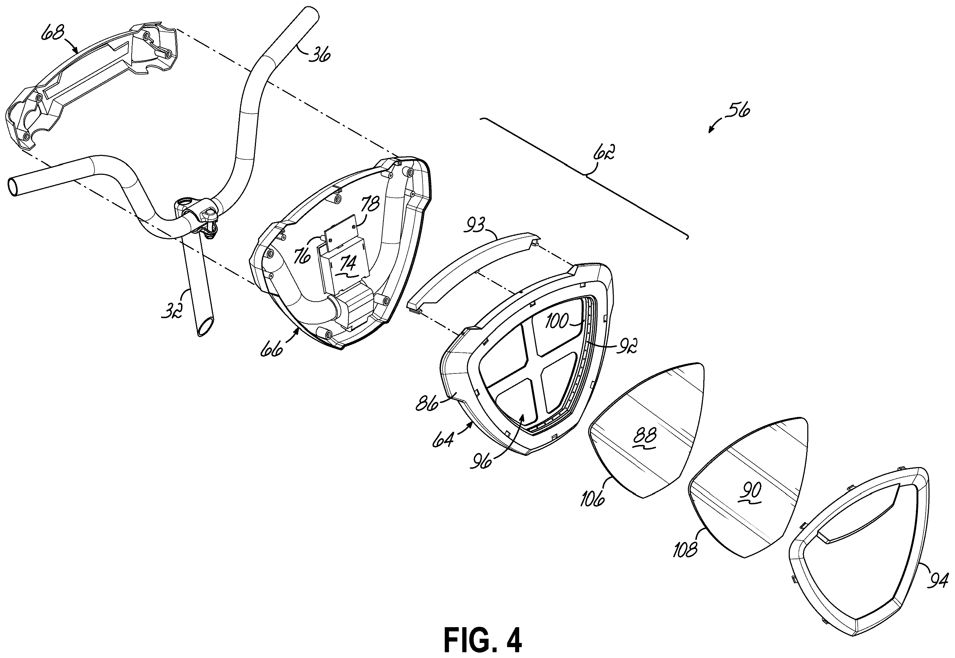

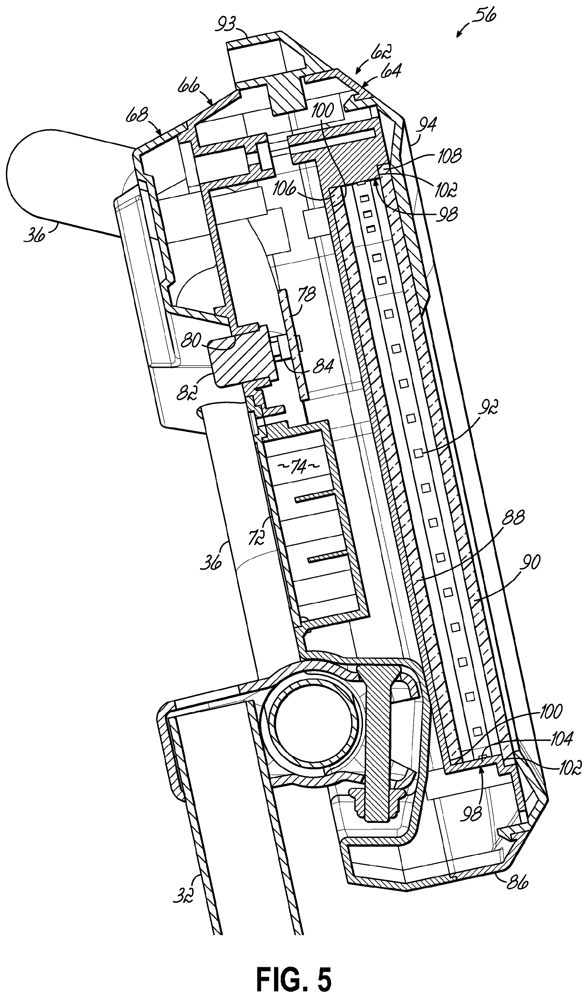

Figs. 2-5 depict an exemplary embodiment of the handlebar lighting unit 56 in more detail. The exemplary handlebar lighting unit 56 includes a housing 62 (e.g., a clamshell housing) having a front portion 64 and a rear portion 66. The housing 62 may be operatively coupled to the handlebars 36 by attaching one or more brackets 68 (e.g., upper and lower brackets 68) to the rear portion 66 of housing 62 using suitable fasteners, such as screws. Once attached, the rear portion 66 and brackets 68 of housing 62 may work cooperatively to secure the lighting unit 56 to the handlebars 36. The rear portion 66 of housing 62 may include a door 72 that provides access to a battery compartment 74, one or more standoffs 76 configured to receive a circuit board 78, and an opening 80 configured to receive a push button 82. The push button 82 may be configured to activate a switch 84 positioned on the circuit board 78, thereby enabling the user to interact with the lighting unit 56.

The front portion 64 of housing 62 may include a casing 86, an inner mirror 88, an outer mirror 90, one or more light emitting devices 92 positioned between the mirrors 88, 90, a top piece 93, and a retainer 94. The inner mirror 88 and outer mirror 90 may be generally parallel to, and spaced longitudinally from, each other so that there is a space between the mirrors. In the depicted embodiment, the casing 86 includes an opening 96 ringed by a flange 98. The flange 98 includes an inner seat 100 that extends laterally into the opening 96, an outer seat 102 that is generally parallel to the inner seat 100, and a longitudinal wall 104 connecting the inner seat 100 and outer seat 102 such that the seats are longitudinally spaced. A peripheral region 106 of the inner mirror 88 may be seated on the inner seat 100 of flange 98 and a peripheral region 108 of the outer mirror 90 may be seated on the outer seat 102 of flange 98 such that a space is defined between the mirrors. The outer mirror 90 may be held in place against the outer seat 102 of flange 98 by the retainer 94, which may clip onto the casing 86 of the front portion 64 of housing 62.

The light emitting devices 92 may include one or more components (e.g., one or more light emitting diodes (LEDs)) that emit light in response to receiving an electric signal, e.g., an electric voltage or current. In one embodiment, each light emitting device 92 may include one or more LEDs (e.g., one or more red, green, or blue LEDs) configured so that the light emitting device 92 can selectively output light perceived as having different colors and intensities. The light emitting devices 92 may be arranged in an array positioned between the peripheral regions 106, 108 of inner and outer mirrors 88, 90, e.g., along the longitudinal wall 104 of flange 98.

The inner mirror 88 may be configured to reflect at least a portion of the light received from the light emitting devices 92 towards the outer mirror 90. The outer mirror 90 may be configured to reflect a portion of the light incident on the inner surface thereof (e.g., light received from the light emitting devices 92 and reflected light received from the inner mirror 88) back towards the inner mirror 88, and to transmit at least a portion of the non-reflected incident light. To this end, each of the mirrors 88, 90 may include a base layer of rigid transparent material (e.g., a sheet of acrylic, polycarbonate, or other suitable material) and a reflective layer (e.g., a reflective film) operatively coupled to the base layer. The reflective layers may provide a reflective surface to each mirror, and the mirrors may be arranged in the flange 98 so that the reflective surfaces face each other in the assembled lighting unit 56. As a result, the inner and outer mirrors 88, 90 may provide a visual effect that is commonly referred to as an "infinity mirror" when the light emitting devices 92 are activated.

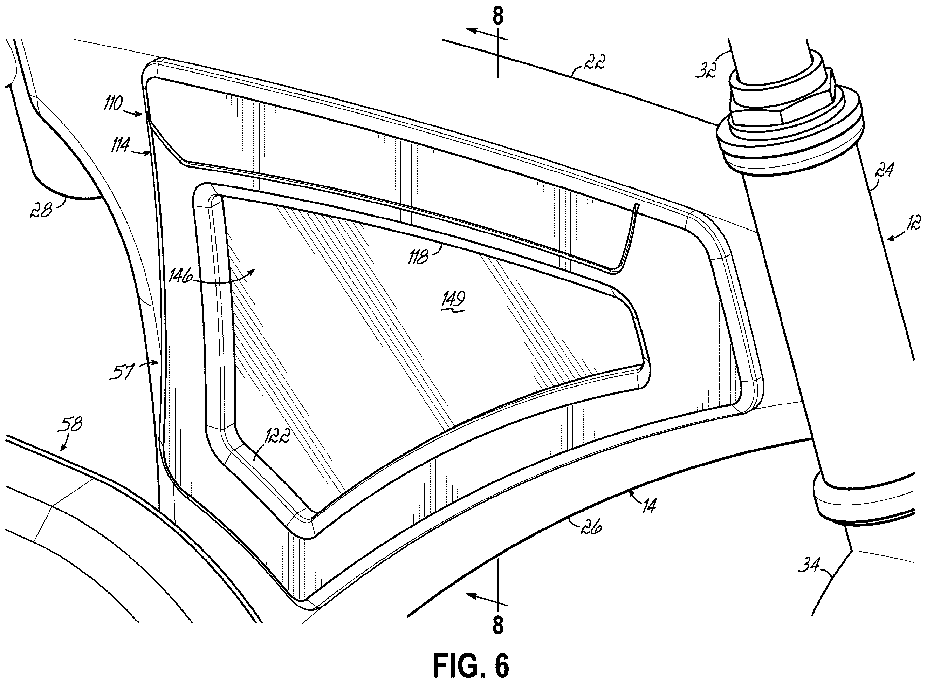

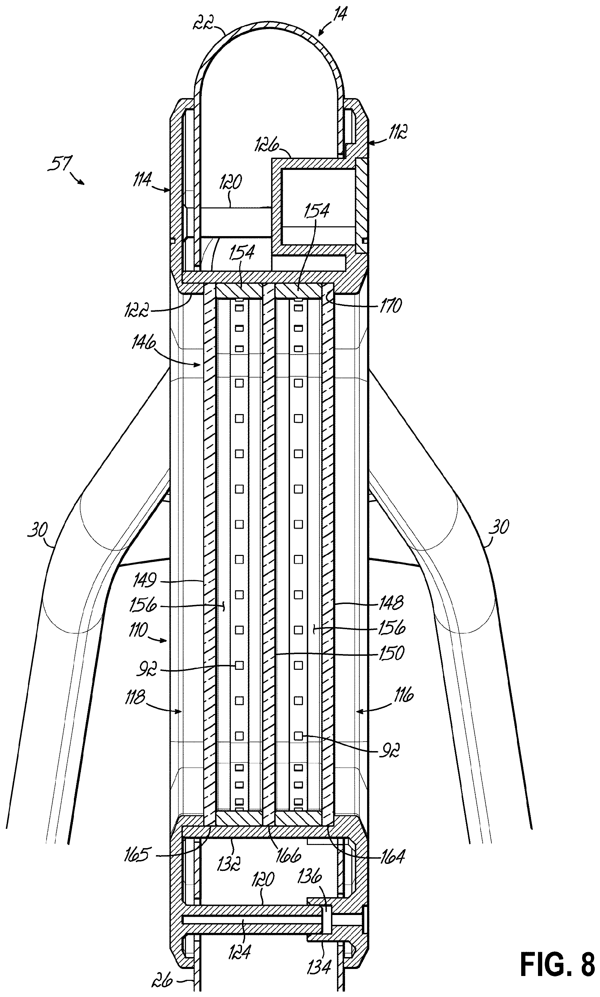

Figs. 6-8 depict an exemplary embodiment of the frame lighting unit 57. The exemplary frame lighting unit 57 includes a housing 110 having a left portion 112 and a right portion 114. The left portion 112 of housing 110 may include an opening 116, and the right portion 114 of housing 110 may include an opening 118. The right portion 114 may further include a plurality of bosses 120 and a flange 122. The bosses 120 may extend outward from the right portion 114 of housing 110 toward the left portion 112 of housing 110. Each boss 120 may include a bore 124 configured to accept a fastener, such as a screw (not shown).

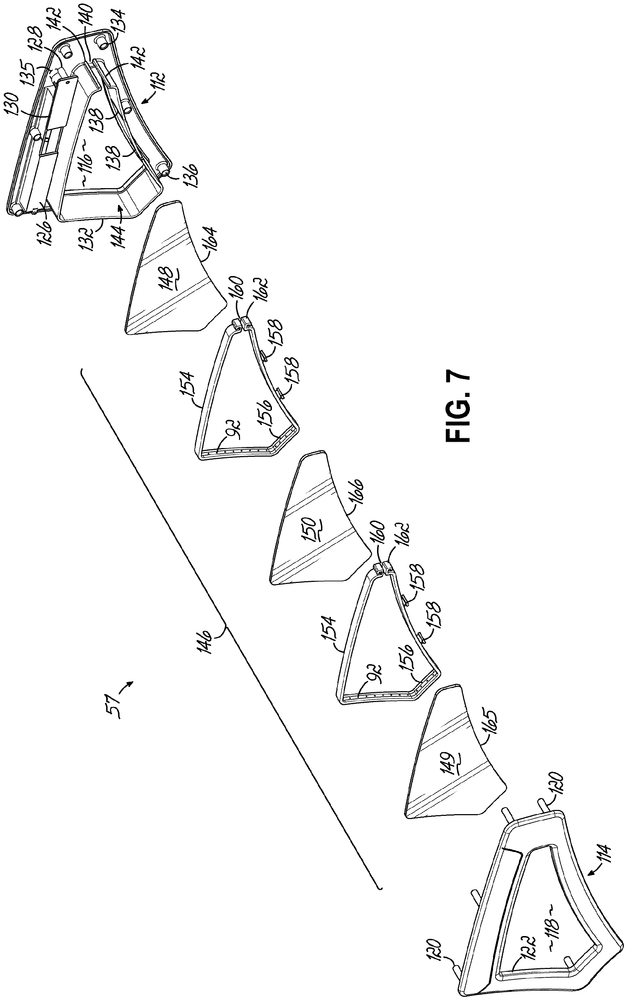

The left portion 112 of housing 110 may include a battery compartment 126, one or more standoffs 128, a circuit board 130 mounted to the standoffs 128, a skirt 132 that extends outward from the opening 116, and a plurality of tabs 134. The left portion 112 of housing 110 may also include push button 135 (Fig. 7) configured to activate a switch on the circuit board 130, thereby enabling the user to interact with the lighting unit 57 in a manner similar to that described above with respect to the handlebar lighting unit 56.

Each tab 134 of the left portion 112 of housing 110 may include a bore 136 configured to engage a respective boss 120 of the right portion 114 of housing 110. The skirt 132 of the left portion 112 of housing 110 may include one or more alignment slots 138 and an access slot 140. Each side of the access slot 140 may include a flange 142. The skirt 132 of the left portion 112 of housing 110 may be configured to engage the flange 122 of the right portion of housing 110 to define a cavity 144. The access slot 140 of skirt 132 may be configured to provide an opening through which components positioned in the cavity 144 (e.g., light emitting devices 92) may be operatively coupled to components positioned outside the cavity 144 (e.g., the circuit board 130). The cavity 144 may be configured to contain a lighting assembly 146 that includes a left exterior mirror 148, a right exterior mirror 149, an interior mirror 150, and a plurality of spacers 154, e.g., two spacers 154.

Each spacer 154 may be configured to space one of the exterior mirrors 148, 149 from the interior mirror 150, and may include an inward-facing surface 156, one or more T-shaped lugs 158, and an access slot 160. Each spacer 154 may also include one or more light emitting devices 92, e.g., an array of light emitting devices 92 arranged along the inward-facing surface 156 thereof. Each T-shaped lug 158 of each spacer 154 may be configured to engage a respective alignment slot 138 of skirt 132. The access slot 160 of each spacer 154 may be configured to provide an opening through which components positioned in a space defined by the spacer 154 (e.g., the light emitting devices 92) may be operatively coupled (e.g., by a conductor - not shown) to components positioned outside the cavity 144 (e.g., the circuit board 130). Each side of the access slot 160 of each spacer 154 may include a flange 162 configured to engage a respective flange 142 of access slot 140. The T-shaped lugs 158 and flanges 162 of spacer 154 may thereby align the spacer 154 with the cavity 144 during assembly of the frame lighting unit 57.

Each mirror 148-150 of lighting assembly 146 may include a respective peripheral region 164-166, and the skirt 132 may include a seat 170 configured to engage the peripheral region 164 of left exterior mirror 148. The left exterior mirror 148 may be positioned within the skirt 132 so that the peripheral region 164 thereof engages the seat 170 of skirt 132. One of the spacers 154 may be positioned between the left exterior mirror 148 and interior mirror 150, and another of the spacers 154 positioned between the interior mirror 150 and right exterior mirror 149. The right portion 114 of housing 110 may then be attached to the left portion 112 of housing 110 (e.g., using screws or other suitable fasteners - not shown) so that the mirrors 148-150 and spacers 154 form a stack that is held together by the housing 110 of frame lighting unit 57. The left and right portions of the housing 110 of frame lighting unit 57 may also engage one or more of the top tube 22, head tube 24, down tube 26, and seat tube 28 of frame 12 such that the frame lighting unit 57 is held in place in the main triangle 14 of bicycle 10 by the housing 110.

Each side of the interior mirror 150 may be configured to reflect at least a portion of the light received from the light emitting devices 92 in the space between the interior mirror 150 and the exterior mirror 148, 149 on that side of the interior mirror 150. Each of the exterior mirrors 148, 149 may be configured to reflect a portion of the light incident on the inner surface thereof (e.g., light received from the light emitting devices 92 and reflected light received from the interior mirror 150) back towards the interior mirror 150, and to transmit at least a portion of the non-reflected incident light. To this end, each of the mirrors 148-150 may include a base layer of rigid transparent material (e.g., a sheet of acrylic, polycarbonate, or other suitable material) and one or more reflective layers (e.g., a reflective film) operatively coupled to the base layer. The reflective layers may provide one or more reflective surfaces to each mirror, and the mirrors may be arranged in the cavity 144 so that the reflective surfaces face each other in the assembled lighting unit 57. For example, each of the exterior mirrors 148, 149 may include a reflective film on the surface facing the interior mirror 150, and the interior mirror 150 may include a reflective film on each surface thereof. As a result, the mirrors 148-150 may provide the infinity mirror effect described above on each side of the frame lighting unit 57 when the light emitting devices 92 are activated.

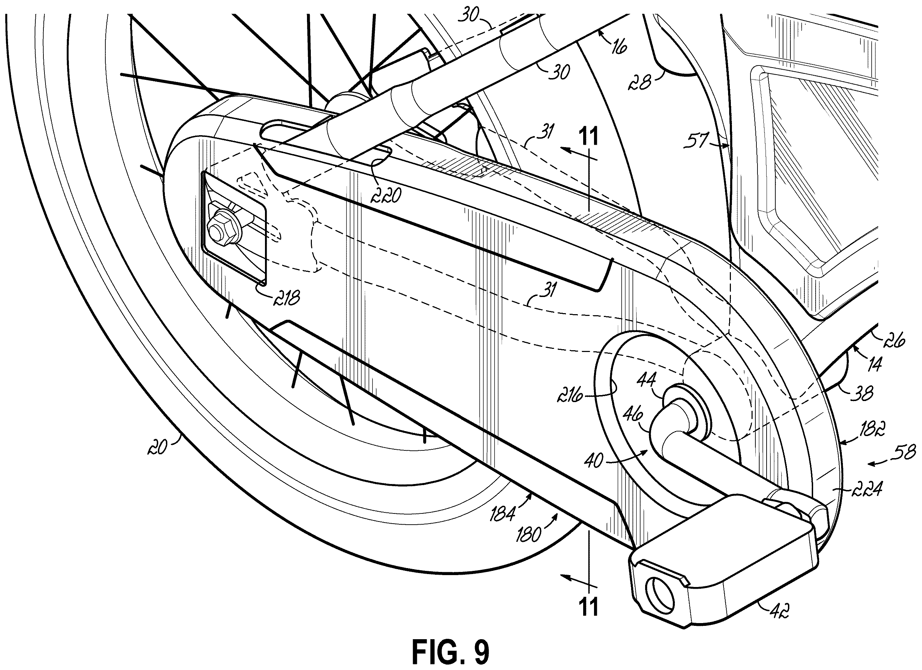

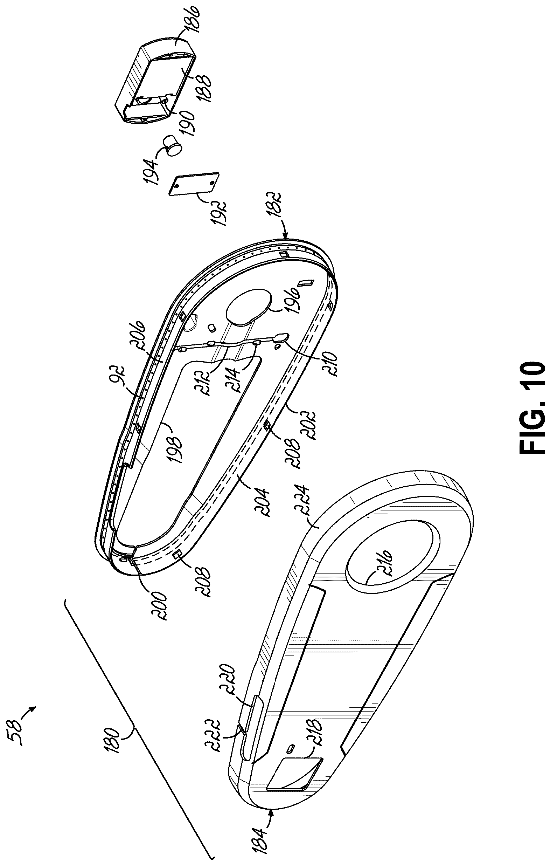

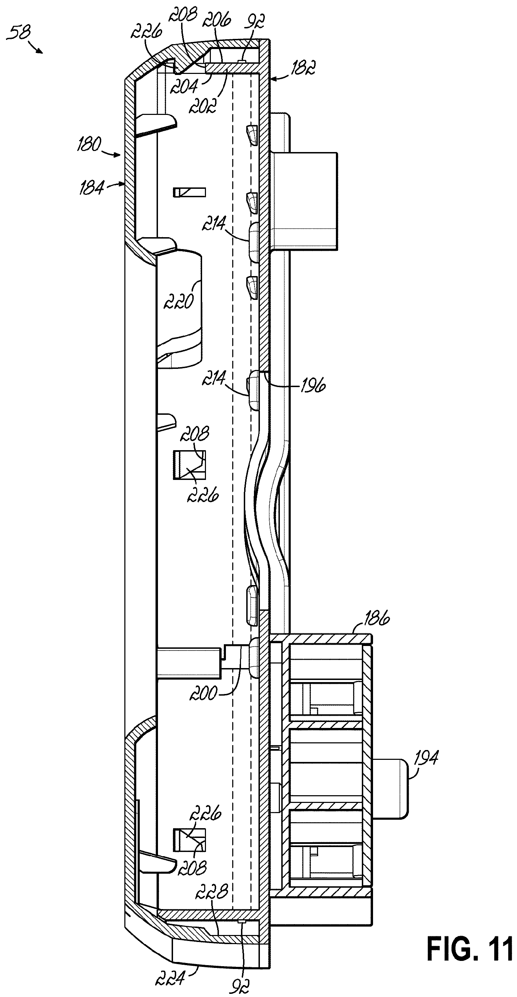

Figs. 9-11 depict an exemplary embodiment of the chainguard lighting unit 58. The exemplary chainguard lighting unit 58 includes a housing 180 having an inner portion 182, an outer portion 184, and a control module 186. The control module 186 may include a battery compartment 188, one or more standoffs 190, a circuit board 192 mounted to the standoffs 190, and push button 194. As described above with respect to the handlebar lighting unit 56, the push button 194 may be configured to activate a switch (not shown) positioned on the circuit board 192.

The inner portion 182 of housing 180 may include one or more light emitting devices 92, a front opening 196, a rear opening 198, a pass-through slot 200, and a skirt 202. The front opening 196 may be configured to allow the crankset 40 to be operatively coupled to the bottom bracket 44. The rear opening 198 may be configured to allow the one or more sprockets of rear wheel 20 to be operatively coupled to the chain that transfers rotational force from the crankset 40 to the rear wheel 20. The pass-through slot 200 may be configured to allow the inner portion 182 of housing 180 to slip over the right seat stay 30 and into position on the bicycle 10 during assembly of the chainguard lighting unit 58.

The skirt 202 of the inner portion 182 of housing 180 may have an inward facing surface 204 that faces the chain of bicycle 10, an outward facing surface 206, and one or more snap-fit holes 208. The light emitting devices 92 may be arranged in an array positioned along the outward facing surface 206 of skirt 202. The light emitting devices 92 may be operatively coupled to the control module 186 by one or more conductive elements (not shown), e.g., wires or a ribbon cable. To accommodate the conductive elements, the inner portion 182 of housing 180 may further include an opening 210 and a channel 212. The opening 210 may provide access to the control module 186, and the channel 212 may be configured to receive the conductive elements connecting the light emitting devices 92 to the control module 186. To prevent the conductive elements from coming into contact with the chain or any other component of the bicycle 10, the inner portion 182 of housing 180 may include one or more clips 214 that extend over the channel 212 and prevent the conductive elements from coming out of the channel 212.

The outer portion 184 of housing 180 may include a front opening 216, a rear opening 218, a top opening 220, an access slot 222, and a skirt 224. The front opening 216 may be configured to accommodate the crankset 40. The rear opening 218 of the outer portion 184 of housing 180 may be configured to provide access to the one or more sprockets and axle of rear wheel 20. The top opening 220 may be configured to accommodate the right seat stay 30 of bicycle 10, and the access slot 222 may allow the seat stay 30 to be placed in the top opening 220 during assembly of the chainguard lighting unit 58. At least a portion of the outer portion 184 of housing 180 (e.g., the skirt 224) may be made from a transparent or translucent material. This material may allow light emitted by the light emitting devices 92 to be transmitted through the outer portion 184 of housing 180 so that the light is visible to persons in the vicinity of the bicycle 10.

A plurality of snap-fit protrusions 226 may project outward from an inner surface 228 of skirt 224. Each snap-fit protrusion 226 may be configured to engage a corresponding one of the snap-fit holes 208 in the skirt 202 of the inner portion 182 of housing 180. The snap-fit holes 208 and snap-fit protrusions 226 may thereby provide snap-fit joints that secure the inner and outer portions 182, 184 of housing 180 to each other during assembly.

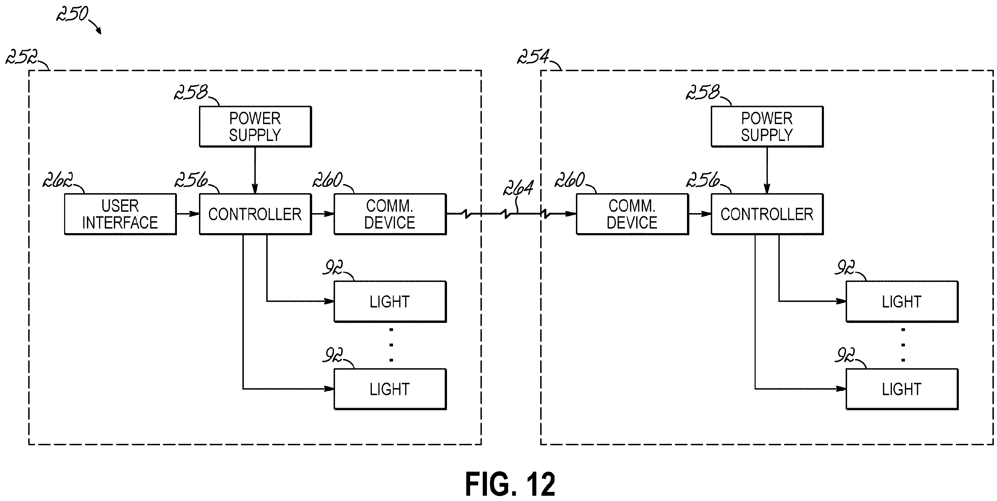

Fig. 12 depicts an exemplary synchronized lighting system 250 in accordance with one or more embodiments of the present disclosure. The depicted lighting system 250 includes a command lighting module 252 and a subordinate lighting module 254, although it should be understood that alternative embodiments of the lighting system 250 may include more than one subordinate lighting module 254. By way of example, in the embodiment depicted by Fig. 1, the handlebar lighting unit 56 may be configured to include a command lighting module 252, and each of the frame lighting unit 57 and chainguard lighting unit 58 may include a subordinate lighting module 254. Each lighting module 252, 254 may include the one or more light emitting devices 92, a controller 256, a power supply 258 (e.g., a battery pack), and a communication device 260. The command lighting module 252 may further include a user interface 262, which may be provided by the push button 82 and switch 84, for example. In each case, the controller 256 may be operatively coupled to each of the light emitting devices 92, power supply 258, communication device 260, and (when present) the user interface 262. Embodiments of the lighting system 250 may include systems with a single command lighting module 252 and one or more subordinate lighting modules 254, a plurality of command lighting modules 252, or any other combination of one or more command lighting modules 252 and subordinate lighting modules 254. For embodiments including more than one command lighting module 252, each command lighting module 252 may be configured to function as a subordinate lighting module 254 in response to receiving a wireless signal 264 from another command lighting module 252.

The controller 256 may include one or more of a microcontroller, processor, memory, and any other electrical circuits or components configured to operate the lighting units 56-58 as described herein. The power supply 258 may include one or more self-contained sources of power, e.g., one or more batteries, etc. The power supply 258 may further include circuitry for coupling the power supply 258 (either by a direct connection or inductively) to an external source of power, such as a charging device or a universal serial bus (USB) port. The power supply 258 may also be configured to enable the controller 256 to selectively control which of the other components of the lighting module 252, 254 receive power from the power supply 258.

The communication device 260 may include one or more of an infrared emitter (e.g., an infrared LED), infrared receiver, or other suitable wireless communication components (e.g., a Bluetooth transmitter/receiver). In an embodiment of the system 250, the communication device 260 of command lighting module 252 may include an infrared emitter, and the communication device 260 of each subordinate lighting module 254 may include an infrared receiver such that communication is unidirectional from the command lighting module 252 to the subordinate lighting modules 254. In this embodiment, one command lighting module 252 (e.g., of handlebar lighting unit 56) may broadcast the wireless signal 264 (e.g., an infrared signal) to one or more subordinate lighting modules 254 (e.g., in the frame lighting unit 57 and chainguard lighting unit 58).

The wireless signal 264 may be configured to activate and provide synchronization information to subordinate lighting modules 58. To this end, data may be embedded in the wireless signal 264 that identifies a current state of the command lighting module 252. The data defining the synchronization information may be embedded in the wireless signal 264 in any suitable manner, such as by modulating one or more of the amplitude, frequency, and phase of the wireless signal 264.

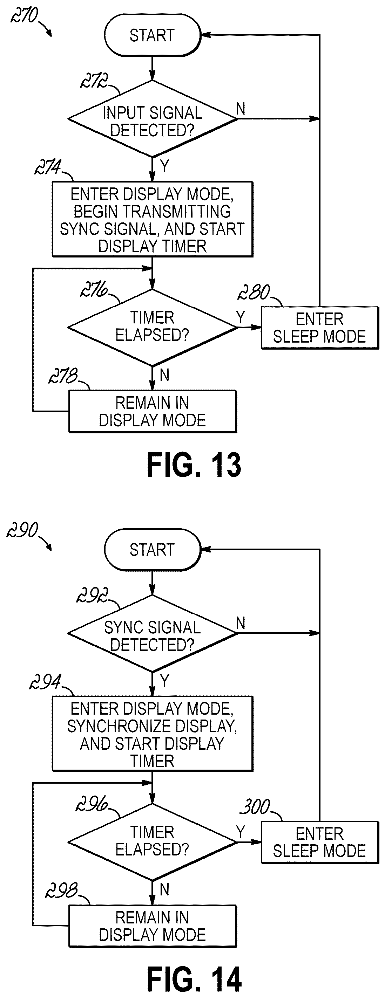

Fig. 13 depicts a flowchart illustrating a process 270 that may be implemented by the command lighting module 252. In block 272, the process 270 may detect an input signal, e.g., a signal generated by the switch 84 being activated by a user. If an input signal is not detected ("NO" branch of decision block 272), the process 270 may remain in a low-power sleep mode. In response to detecting an input signal ("YES" branch of decision block 272, the process 270 may "wake up" and proceed to block 274.

In block 274, the process 270 may enter a display mode, begin transmitting synchronization information (e.g., using wireless signal 264), and start a display timer. While in the display mode, the process 270 may cause the light emitting devices 92 to emit light according to a predetermined lighting pattern. As used herein, the term "lighting pattern" refers to a sequence of lighting states, wherein each lighting state defines the output of light emitting devices 92 for a predetermined period of time, e.g., 0.1 to 1.0 seconds. Each lighting state may specify one or both of the color and the intensity of the light emitted by each light emitting devices 92 while the lighting module 252 is in that state. The process 270 may be configured to sequentially step through one or more sequences of lighting states while the process 270 is in the display mode.

By selectively changing the outputs of the light emitting devices between lighting states, light emitted by the lighting units 56-58 may appear to move (e.g., chase itself around the lighting unit 56-58), gradually change from one color to another (e.g., sweep from red to yellow to green to cyan to blue to magenta and back to red), flash in various patterns, or generate any other pattern of light. A lighting pattern may comprise a fixed sequence of states that is repeated cyclically while the process 270 is in display mode, multiple sequences of states in which one sequence is repeated for one period of time and then replaced by another sequence that is repeated for another period of time while the process 270 is in the display mode, or a non-repeating sequence of states (e.g., randomly selected from a plurality of states) that is displayed while the process 270 is in display mode.

The synchronization information may identify which lighting state the process 270 is currently causing the command lighting module 252 to display. To this end, each lighting state may be associated with a unique identifier, and the process 270 may encode the unique identifier of the current lighting state into the wireless signal 264. Subordinate lighting modules 254 may then use the unique identifier decoded from the received wireless signal 264 to determine which lighting state to display.

In block 276, the process 270 may determine if a display time has elapsed. The display time may have elapsed if the display timer has elapsed, e.g., has reached zero (for a countdown timer) or a threshold value (for a count up timer). If the display time has not elapsed ("NO" branch of decision block 276), the process 270 may proceed to block 278 and remain in display mode. Although not depicted by Fig. 13, the process 270 may continue to monitor for the input signal while in the display mode. In this embodiment of the process 270, detecting the input signal while in the display mode may cause the process 270 to perform one or more of resetting the display timer and re-synching the lighting pattern to an initial lighting state. If the display time has elapsed ("YES" branch of decision block 276), the process 270 may proceed to block 280, enter sleep mode, and return to block 272. The display time may be predetermined (i.e., set to a fixed time, such as between two and three minutes), may be selectable, or may vary.

Fig. 14 depicts a flowchart illustrating a process 290 that may be implemented by the subordinate lighting modules 254. In block 292, the process 290 may detect a synchronization signal, e.g., a wireless signal 264 received by the communication device 260 that has one or more characteristics of a synchronization signal. If the synchronization signal is not detected ("NO" branch of decision block 292), the process 290 may remain in sleep mode. If the synchronization signal is detected ("YES" branch of decision block 292, the process 290 may wake up and proceed to block 294.

In block 294, the process 290 may enter the display mode, synchronize the display with the lighting pattern being displayed by the command lighting module 252, and start a display timer. As with process 270, while in display mode, process 290 may cause the light emitting devices 92 to emit light according to the predetermined lighting pattern. So that the lighting pattern is displayed in synchronization with that of the command lighting module 252, the process 290 may decode the unique identifier embedded in the wireless signal 264, identify the lighting state associated with the unique identifier, and cause the predetermined lighting pattern to be displayed at the identified lighting state.

In block 296, the process 290 may determine if the display time has elapsed. If the display time has not elapsed ("NO" branch of decision block 296), the process 290 may proceed to block 298 and remain in display mode. If the display time has elapsed ("YES" branch of decision block 296), the process 290 may proceed to block 300, enter sleep mode, and return to block 292.

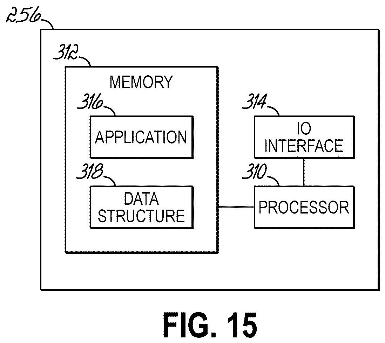

Fig. 15 illustrates an exemplary controller 256 including a processor 310, memory 312, and an input/output (I/O) interface 314. The processor 310 may include one or more devices that perform operations on data based on internal logic or operational instructions that are stored in memory 312. Memory 312 may include a single memory device or a plurality of memory devices capable of storing data. Computer program code embodied as one or more computer software applications, such as an application 316 residing in memory 312, may have instructions executed by the processor 310. One or more data structures 318 may also reside in memory 312, and may be used by the processor 310 or application 316 to store or manipulate data. The I/O interface 314 may provide a machine interface that operatively couples the processor 310 to other devices and systems, such the switch 84 or light emitting devices 92. The application 316 may thereby work cooperatively with the external devices and systems by communicating via the I/O interface 314 to provide the various features, functions, applications, processes, or modules comprising embodiments of the invention.

In general, the routines executed to implement the embodiments of the invention, whether implemented as part of an operating system or a specific application, component, program, object, module or sequence of instructions, or a subset thereof, may be referred to herein as "program code." Program code typically comprises computer-readable instructions that are resident at various times in various memory and storage devices and that, when read and executed by one or more processors of a computer, cause that computer to perform the operations necessary to execute operations or elements embodying the various aspects of the embodiments of the invention. The program code embodied in any of the applications/modules described herein is capable of being individually or collectively distributed as a computer program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of data, such as computer-readable instructions, data structures, program modules, or other data. Computer-readable storage media may include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store data and which can be read by a computer.

Computer-readable program instructions stored in a computer-readable medium may be used to direct a computer, other types of programmable data processing apparatuses, or other devices to function in a particular manner, such that the instructions stored in the computer-readable medium produce an article of manufacture including instructions that implement the functions, acts, or operations specified in the text of the specification, the flowcharts, sequence diagrams, or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, or operations specified in the text of the specification, flowcharts, sequence diagrams, or block diagrams.

The flowcharts and block diagrams depicted in the figures illustrate the architecture, functionality, or operation of possible implementations of systems, methods, or computer program products according to various embodiments of the invention. In this regard, each block in the flowchart or block diagrams may represent a module, segment, or portion of instructions, which comprises one or more executable instructions for implementing the specified logical function or functions.

In certain alternative embodiments, the functions, acts, or operations specified in the text of the specification, the flowcharts, sequence diagrams, or block diagrams may be re-ordered, processed serially, or processed concurrently consistent with embodiments of the invention. Moreover, any of the flowcharts, sequence diagrams, or block diagrams may include more or fewer blocks than those illustrated consistent with embodiments of the invention. It should also be understood that each block of the block diagrams or flowcharts, or any combination of blocks in the block diagrams or flowcharts, may be implemented by a special purpose hardware-based system configured to perform the specified functions or acts, or carried out by a combination of special purpose hardware and computer instructions.

The terminology used herein is for the purpose of describing particular embodiments only and is not intended to be limiting of the embodiments of the invention. As used herein, the singular forms "a", "an" and "the" are intended to include both the singular and plural forms, and the terms "and" and "or" are each intended to include both alternative and conjunctive combinations, unless the context clearly indicates otherwise. It will be further understood that the terms "comprises" or "comprising," when used in this specification, specify the presence of stated features, integers, actions, steps, operations, elements, or components, but do not preclude the presence or addition of one or more other features, integers, actions, steps, operations, elements, components, or groups thereof. Furthermore, to the extent that the terms "includes", "having", "has", "with", "comprised of", or variants thereof are used in either the detailed description or the claims, such terms are intended to be inclusive in a manner similar to the term "comprising".

While all the invention has been illustrated by a description of various embodiments, and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A lighting system for a velocipede, comprising:
a first lighting unit and one or more second lighting units, each of the first lighting unit and the one or more second lighting units including a communication device, one or more light emitting devices, and a controller,
wherein the controller of the first lighting unit is configured to:
cause the one or more light emitting devices of the first lighting unit to emit light according to a predetermined lighting pattern, and
cause the communication device of the first lighting unit to transmit a wireless signal including synchronization information for the predetermined lighting pattern, and
wherein the communication device of each of the one or more second lighting units receives the wireless signal transmitted from the first lighting unit, and the controller of each of the one or more second lighting units is configured to:
in response to the wireless signal being received, cause the one or more light emitting devices of the second lighting unit to emit light according to the predetermined lighting pattern, and
synchronize the predetermined lighting pattern emitted by the one or more light emitting devices of the second lighting unit with the predetermined lighting pattern emitted by the one or more light emitting devices of the first lighting unit using the synchronization information provided by the wireless signal.

2. The system of claim 1, wherein the communication device of the first lighting unit includes an infrared transmitter, and the communication device of each of the one or more second lighting units includes an infrared receiver;
and/or wherein the predetermined lighting pattern has a display time, and each controller is further configured to, in response to the display time lapsing, cause its respective lighting unit to enter a sleep mode.

3. The system of claim 2, wherein the controller of the first lighting unit is further configured to:
wake up the system from the sleep mode in response to receiving an input from a user interface;
preferably wherein the user interface includes a button configured to provide the input to the controller of the first lighting unit in response to the button being activated.

4. The system of claim 2, wherein the controller of each of the one or more second lighting units is further configured to wake up the second lighting unit from the sleep mode in response to receiving the wireless signal.

5. The system of claim 1, wherein at least one of the first lighting unit and the one or more second lighting units further includes:
a first mirror having a reflective surface;
a second mirror having a reflective surface that faces the reflective surface of the first mirror and positioned so as to define a space between the reflective surface of the first mirror and the reflective surface of the second mirror,
wherein at least one of the one or more light emitting devices of the at least one of the first lighting unit and the second lighting unit is positioned in the space between the reflective surface of the first mirror and the reflective surface of the second mirror,
the reflective surface of the first mirror reflects at least a portion of the light emitted by the at least one of the one or more light emitting devices toward the reflective surface of the second mirror, and
the reflective surface of the second mirror reflects a first portion of the light received from the first mirror back towards the first mirror, and transmits a second portion of the light received from the first mirror outward away from the at least one of the first lighting unit and the second lighting unit.

6. The system of claim 5, wherein each of the first mirror and the second mirror includes a peripheral region, and the at least one of the one or more light emitting devices is positioned between the peripheral regions of the first mirror and the second mirror.

7. The system of claim 5, wherein the reflective surface of the first mirror is a first reflective surface thereof, and the at least one of the first lighting unit and the second lighting unit further includes:
a third mirror having a reflective surface, wherein:
the first mirror includes a second reflective surface opposite the first reflective surface,
the reflective surface of the third mirror faces the second reflective surface of the first mirror and is positioned so as to define a space between the second reflective surface of the first mirror and the reflective surface of the third mirror,
at least one other light emitting device of the one or more light emitting devices of the at least one of the first lighting unit and the second lighting unit is positioned in the space between the second reflective surface of the first mirror and the reflective surface of the third mirror,
the second reflective surface of the first mirror reflects at least a portion of the light emitted by the at least one other light emitting device of the one or more light emitting devices toward the reflective surface of the third mirror, and
the reflective surface of the third mirror reflects a first portion of the light received from the second reflective surface of the first mirror back towards the first mirror, and transmits a second portion of the light received from the second reflective surface of the first mirror outward away from the at least one of the first lighting unit and the second lighting unit.

8. The system of claim 1, wherein the second lighting unit further includes a housing that provides a chainguard for the velocipede.

9. A method of controlling a plurality of lighting units including a first lighting unit and one or more second lighting units, comprising:
emitting light from one or more light emitting devices of the first lighting unit according to a predetermined lighting pattern;
transmitting a wireless signal from the first lighting unit including synchronization information for the predetermined lighting pattern;
in response to receiving the wireless signal transmitted from the first lighting unit, emitting light from one or more light emitting devices of the one or more second lighting units according to the predetermined lighting pattern; and
synchronizing the predetermined lighting pattern emitted by the one or more light emitting devices of the one or more second lighting units with the predetermined lighting pattern emitted by the one or more light emitting devices of the first lighting unit using the synchronization information provided by the wireless signal.

10. The method of claim 9, wherein the wireless signal is an infrared signal.

11. The method of claim 9, wherein the predetermined lighting pattern has a display time, and further comprising:
in response to the display time lapsing, causing each of the first lighting unit and the one or more second lighting units to enter a sleep mode.

12. The method of claim 11, further comprising:
waking up the first lighting unit from the sleep mode in response to receiving an input from a user interface.

13. The method of claim 11, further comprising:
waking up the one or more second lighting units from the sleep mode in response to receiving the wireless signal from the first lighting unit.

14. The method of claim 9, further comprising:
reflecting at least a portion of the light emitted by the at least one of the one or more light emitting devices from a first mirror toward a second mirror;
reflecting a first portion of the light received by the second mirror back towards the first mirror; and
transmitting a second portion of the light received by the second mirror outward away from the at least one of the first lighting unit and the second lighting unit;
preferably wherein the first mirror includes a first reflective surface and a second reflective surface opposite the first reflective surface, the at least the portion of the light emitted by the at least one of the one or more light emitting devices reflected from the first mirror is reflected by the first reflective surface, and further including:
reflecting at least a portion of the light emitted by at least one other light emitting device of the one or more light emitting devices from the second reflective surface of the first mirror toward a third mirror;
reflecting a first portion of the light received by the third mirror back towards the second reflective surface of the first mirror; and
transmitting a second portion of the light received by the third mirror outward away from the at least one of the first lighting unit and the second lighting unit.

15. A computer program product comprising:
a non-transitory computer-readable storage medium; and
program code stored on the non-transitory computer-readable storage medium that, when executed by one or more processors, causes the one or more processors to:
cause a first lighting unit to emit light from one or more light emitting devices of the first lighting unit according to a predetermined lighting pattern;
cause the first lighting unit to transmit a wireless signal including synchronization information for the predetermined lighting pattern;
in response to receiving the wireless signal transmitted from the first lighting unit, cause one or more second lighting units to emit light from one or more light emitting devices of the one or more second lighting units according to the predetermined lighting pattern; and
cause the one or more second lighting units to synchronize the predetermined lighting pattern emitted by the one or more light emitting devices of the one or more second lighting units with the predetermined lighting pattern emitted by the one or more light emitting devices of the first lighting unit using the synchronization information provided by the wireless signal.
